# EUROPEAN PATENT APPLICATION

(11) **EP 3 605 428 A1**
(43) Date of publication of application: **05.02.2020**
(21) Application number: 17903250.3
(22) Date of filing: 19.06.2017
(51) Int. Cl.: G06Q 30/06, H04N 7/18

(54) **IMAGE-BASED TRANSACTION METHOD AND DEVICE FOR PERFORMING METHOD**

(30) Priority: 31.03.2017 KR 20170041324; 08.04.2017 KR 20170045614
(71) Applicant: Linkflow Co. Ltd, Gangnam-gu, Seoul 06160 (KR)
(72) Inventor: KIM, Yong Kuk, Suwon-si Gyeonggi-do 16534 (KR); YOO, Seo Hyun, Seoul 06136 (KR); CHO, Sung Rea, Seoul 06262 (KR); KIM, yONG jUN, Busan 48515 (KR); KIM, Jun Sei, Gyeonggi-do 12772 (KR); YOO, Seohyun, Seoul (KR)
(74) Representative: Zardi, Marco
(86) International application number: PCT/KR2017/006421
(87) International publication number: WO 2018/182092

(57) **Abstract**

The present invention relates to an image-based transaction method and a device for performing the method. The image-based transaction method comprises the steps of allowing a product transaction service server to: receive store image information from an image processing device; generate, on the basis of the store image information, information to be provided to a user; and transmit, to a user device, the information to be provided to a user, wherein information to be provided to a user includes image information to be provided to a user and control information.

## Description

### [Technical Field]

The present invention relates to an image-based transaction method, and more particularly, to a method and device for performing a transaction using an image processing device, a user device, etc. without a user visiting an offline store.

### [Background Art]

An omnidirectional image system refers to an image system capable of recording image information in all directions (360 degrees) on the basis of a specific point in time. Since the omnidirectional image system can obtain an image having a much wider field-of-view than that of an existing image system, the application range thereof is gradually extending to the research field, such as computer vision and mobile robot, and fields of practical use, such as a monitoring system, a virtual reality (VR) system, a pan-tilt-zoom (PTZ) camera, and a video conference, these days.

Various methods can be used to obtain an omnidirectional image. For example, an omnidirectional image may be generated by stitching images obtained by rotating one camera on the basis of an optical axis which satisfies a single view point. Alternatively, a plurality of cameras may be arranged in a circular structure, and images obtained from each of the cameras may be combined. A user may generate an omnidirectional image using various omnidirectional image processing devices (omnidirectional image processing cameras or 360° cameras).

Omnidirectional image systems can be used in various fields. For example, an omnidirectional image system may be used in a field, such as crime prevention or security, in which it is required to monitor images in all directions or used to record a place that a traveler visited during a trip. Furthermore, an omnidirectional image captured based on an omnidirectional image device may be edited and used as an image for product sales.

Therefore, it is necessary to develop a technology which enables a user to utilize an omnidirectional image in various fields through various kinds of processing on an omnidirectional image which is generated on the basis of an omnidirectional image processing device.

### [Disclosure]

### [Technical Problem]

The present invention is directed to solving all the problems described above.

The present invention is directed to carrying out a product transaction on the basis of store image information generated by an image processing device without a user visiting an offline store.

The present invention is directed to effectively carrying out a transaction of a required product through a user-provided image on the basis of user-input information input through a user interface with no need for the user to move by generating a user-provided image on the basis of a store image and generating control information on the basis of the user-provided image.

### [Technical Solution]

Representative configurations of the present invention for achieving the objectives are as follows.

One aspect of the present invention provides an image-based transaction method, the method comprising receiving, by a product transaction service server, store image information from an image processing device, generating, by the product transaction service server, a user-provided information on the basis of the store image information and transmitting, by the product transaction service server, the user-provided information to a user device, wherein the user-provided information includes user-provided image information and control information.

Another aspect of the present invention provides a product transaction service server for an image-based transaction, the product transaction service server comprising a communication unit configured to perform data communication with an image processing device and a user device and a processor configured to be operatively connected to the communication unit, wherein the processor receives store image information from the image processing device, generates user-provided information on the basis of the store image information, and transmits the user-provided information to the user device, and the user-provided information includes user-provided image information and control information.

### [Advantageous Effects]

According to the present invention, a product transaction can be carried out on the basis of store image information generated by an image processing device without a user visiting an offline store.

Also, according to the present invention, a transaction of a required product can be effectively carried out through a user-provided image on the basis of user-input information input through a user interface with no need for the user to move by generating a user-provided image on the basis of a store image and generating control information on the basis of the user-provided image.

### [Description of Drawings]

FIG. 1 is a conceptual diagram of an image-based product transaction system according to an embodiment of the present invention.
FIG. 2 is a conceptual diagram of an operation of an image processing device according to an embodiment of the present invention.
FIG. 3 is a conceptual diagram of an operation of a product transaction service server according to an embodiment of the present invention.
FIG. 4 is a conceptual diagram of an operation of a product transaction service server according to an embodiment of the present invention.
FIG. 5 is a conceptual diagram of an operation of a product transaction service server according to an embodiment of the present invention.
FIG. 6 is a conceptual diagram showing an operation of a product transaction service server according to an embodiment of the present invention.
FIG. 7 is a conceptual diagram showing an operation of a product transaction service server according to an embodiment of the present invention.
FIG. 8 is a conceptual diagram showing an operation of a product transaction service according to an embodiment of the present invention.
FIG. 9 is a schematic view illustrating an omnidirectional image processing apparatus according to an exemplary embodiment of the present inventive concept.
FIG. 10 is a schematic view showing the characteristics of a plurality of image capturing units provided in the omnidirectional image processing apparatus according to an exemplary embodiment of the present inventive concept.
FIG. 11 is a schematic view illustrating image capturing lines of a plurality of image capturing units according to an exemplary embodiment of the present inventive concept.
FIG. 12 is a schematic view illustrating image capturing lines of a plurality of image capturing units according to an exemplary embodiment of the present inventive concept.

### [Modes of the Invention]

In the following detailed description of the present inventive concept, references are made to the accompanying drawings that show, by way of illustration, specific embodiments in which the present inventive concept may be practiced. These embodiments are described in sufficient detail to enable those skilled in the art to practice the present inventive concept. It is to be understood that the various embodiments of the present inventive concept, although different from each other, are not necessarily mutually exclusive. For example, specific shapes, structures and characteristics described herein may be implemented as modified from one embodiment to another without departing from the spirit and scope of the present inventive concept. Furthermore, it shall be understood that the locations or arrangements of individual components within each embodiment may also be modified without departing from the spirit and scope of the present inventive concept. Therefore, the following detailed description is not to be taken in a limiting sense, and the scope of the present inventive concept is to be taken as encompassing the scope of the appended claims and all equivalents thereof. In the drawings, like reference numerals refer to the same or similar elements throughout the several views.

Hereinafter, preferred embodiments of the present inventive concept will be described in detail with reference to the accompanying drawings to enable those skilled in the art to easily implement the present inventive concept.

Hereinafter, an image processing device according to an embodiment of the present invention may include an omnidirectional image processing device. The omnidirectional image processing device may include an omnidirectional camera (360° camera) capable of imaging all directions (or a 360° image).

In addition, hereinafter, the term "product" may be used in referring to an intangible service as well as tangible goods.

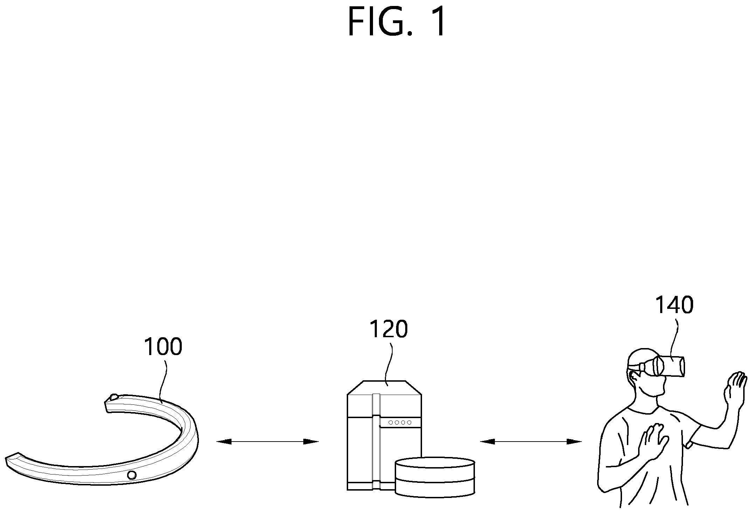

FIG. 1 is a conceptual diagram of an image-based product transaction system according to an embodiment of the present invention.

FIG. 1 shows a product transaction system for purchasing a product on the basis of an image without a user visiting an offline store.

The product transaction system may include an image processing device 100, a product transaction service server 120, and a user device 140.

The image processing device 100 may be implemented to generate an image (e.g., an omnidirectional image) of a product (or a store). For example, in an offline store, products may be arranged on a display stand (or a stall) for product sales. The image processing device 100 may move through a passage in the offline store and generate images of the store and/or products arranged in the store. The images generated by the image processing device 100 regarding the store and/or the products arranged in the store may be indicated by the term "store images."

The image processing device 100 may not image an actual offline store and may generate a virtual image of an offline store. The virtual image of an offline store may be an image generated by virtually setting a store, display stands, products, passages, etc. in a virtual space. Hereinafter, the term "store image" may be used herein to encompass a virtual image of an offline store.

The product transaction service server 120 may provide user-provided information for product purchase by processing store images received from the image processing device to the user device 140 of a user.

The user-provided information may include a user-provided image, control information for a user's virtual movement and product purchase in the user device 140 (e.g., movement control information and transaction control information), and the like. The user-provided image may be an image of a store which is generated on the basis of the store images and be provided and output through the user device 140.

The product transaction service server 120 may generate the user-provided image through image processing, such as excluding an overlapping or unnecessary part of the store images, classifying the store images according to passages in the store, and the like. For example, the product transaction service server 120 may determine the user-provided image by excluding an overlap from the store images generated by the image processing device 100. Also, the product transaction service server 120 may generate passage-specific user-provided images by classifying the store images according to passages in consideration of information of locations at which the store images have been captured. For example, when a passage branches into a first passage and a second passage at a junction, a first passage user-provided image may be generated on the basis of a first store image of the first passage, and a second passage user-provided image may be generated on the basis of a second store image of the second passage.

The product transaction service server 120 may generate movement control information for virtual movement of the user on the user-provided image. For example, the product transaction service server 120 may determine a junction of passages in the store present in the user-provided image and generate movement control information for outputting a user interface (movement) at the junction. The user interface (movement) may be implemented to determine a virtual movement direction of the user. Also, the product transaction service server 120 may generate movement control information for matching information input through the user interface (movement) at the junction and the user-provided image to each other.

In other words, the product transaction service server 120 may provide the user interface (movement) at a junction in the store images to receive user-input information through the user interface (movement) and may generate movement control information for providing a user-provided image according to a virtual movement direction of the user based on the user-input information.

For example, when the user is located at a junction through image processing of the product transaction service server 120, a user interface (movement) may be output on the basis of movement control information on a user-provided image which is output through the user device 140. User-input information which indicates a movement direction may be input through the user interface (movement). A user-provided image corresponding to the movement direction indicated by the user-input information may be provided to the user on the basis of the movement control information. In this way, the user may direct a movement direction through the user device 140 and virtually move in the store.

The product transaction service server 120 may generate transaction control information for a user's product information acquisition, product selection, and product transaction procedure. For example, the product transaction service server 120 may extract a product image existing in a user-provided image as object information and determine a product corresponding to the product image. The product transaction service server 120 may generate transaction control server for matching product information of the determined product to the product image.

When a product is selected through a user interface (transaction), the product transaction service server 120 may generate transaction control information to provide additional product information and perform a transaction for the product. The user interface (transaction) may be implemented to select a product and perform a transaction for the product in a user-provided image. The transaction control information may include information for a product selection and transaction, such as the price, origin, and transaction conditions of the product.

Product information may be matched to a product image in the user-provided image on the basis of the transaction control information generated by the product transaction service server 120. Also, when the product image is selected by the user through the user interface (transaction), additional product information of the product may be provided and the transaction procedure thereof may be performed on the basis of the transaction control information generated by the product transaction service server 120.

The product transaction service server 120 may receive product transaction request information of the product selected by the user and perform a product transaction procedure based on the product transaction request information. For example, the user may make a payment for a product which is purchased while the user is moving in the store through the user device 140. When the payment is made, product transaction request information may be transferred to the product transaction service server 120. The product transaction service server 120 may receive payment information (e.g., card information) from the user device 140 (or an additional user device) and perform a payment procedure for the product. The payment procedure may be performed in cooperation with a bank server. The product whose transaction has been finished by the product transaction service server 120 may be delivered to the user.

The product transaction service server 120 may provide user-provided images to a user device all together or may receive a user-provided image request from the user device 140 according to user-input information input through a user interface and provide the requested user-provided image.

The product transaction service server 120 may include a communication unit for data communication with an image processing device and a user device and a processor operatively connected to the communication unit. Operation of the product transaction service server 120 disclosed in an embodiment of the present invention may be performed on the basis of the processor.

Detailed operation of the product transaction service server 120 will be described below.

The user device 140 may be implemented for product purchase of the user. The user device 140 may receive user-provided information from the product transaction service server 120 and output a user-provided image. Also, user-input information may be input through the user device 140, and a product purchasing procedure may be performed while the user is virtually moving in a store on the basis of movement control information and transaction control information corresponding to the user-input information.

For example, the user device 140 may receive user-input information through a user interface (movement) and cause the user to virtually move in the store on the user-provided image. Also, the user device 140 may receive user-input information through a user interface (transaction) and perform a process in which the user selects a product, is provided with information on product, and purchases the product in the user-provided image.

For example, the user device 140 may be a device which can output an omnidirectional virtual reality (VR) or augmented reality (AR) image and receive a motion of a hand as user-input information. The user device 140 may be a head mounted display (HMD) and may interpret and receive a motion of the user's hand as user-input information.

Specifically, the user may select a movement direction through a user interface (movement) on the user-provided image provided through the user device 140 and virtually move in the store. For example, the user-provided image may output a user interface (movement) at a junction. An icon (or an image) which indicates a movement direction and is included in the user interface (movement) may be selected by the user's hand. The user device 140 may recognize the movement of the hand as input information, and a user-provided image corresponding to the specific direction selected by the user on the basis of movement control information may be provided.

Also, the user may select and purchase a product that he or she wants to purchase through a user interface (transaction) on the user-provided image provided through the user device 140. For example, a product to be purchased may be selected by a hand on the user-provided image. In this case, the user device 140 may recognize a motion of the hand as user-input information through the user interface (transaction), provide information (the price, the origin, etc.) on the product selected by the user on the basis of transaction control information, and perform a product purchasing procedure.

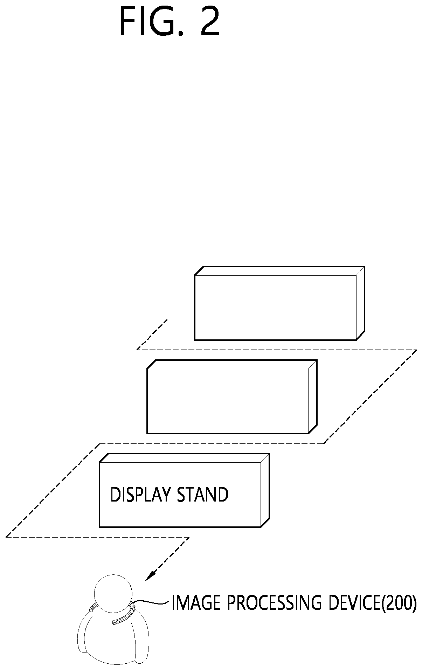

FIG. 2 is a conceptual diagram of an operation of an image processing device according to an embodiment of the present invention.

FIG. 2 shows an image generation operation of an image processing device. For example, the image processing device may be an omnidirectional image processing device, and a generated image may be an omnidirectional image.

Referring to FIG. 2, an image processing device 200 may capture information on products in a store.

A manager or a moving device may move the image processing device 200 in a store, and the image processing device may generate a store image by capturing a 360° image of the inside of the store. The image processing device 200 according to an embodiment of the present invention may be a wearable 360° image capturing device, or a manager who wears the image processing device 200 may generate store images while moving in the store. In other words, the image processing device 200 may move along various passages in the store and generate store images by imaging products placed on display stands.

A route of the image processing device 200 may be set in various ways. For example, map information of the inside of the store may be input, and the image processing device 200 may move according to the map information of the inside of the store. The map information of the inside of the store may include passages in the store and locations of products in the store (or product information according to locations in the store).

The route of the image processing device 200 may be determined on the basis of the map information of the inside of the store. The route of the image processing device 200 may be determined to include all passages in the store and minimize overlapping passages. Also, the route of the image processing device 200 may be determined by additionally considering a distance at which the image processing device 200 can capture an image. The movement speed of the image processing device 200 may be determined on the basis of whether a product exists in a passage in the store. When no product exists in a passage in the store, the movement speed of the image processing device 200 may be relatively low, and when a product exists in a passage in the store, the movement speed of the image processing device 200 may be relative high.

Information on the route of the image processing device 200 and information on overlapping passages may be transferred to the product transaction service server. The product transaction service server may remove images of overlapping passages and classify the store images on the basis of the information on the route of the image processing device 200.

As described above, a store image generated by the image processing device 200 may be a virtual image. The virtual image may be generated by arranging virtual display stands in a virtual store space and arranging virtual products on the virtual display stands. The image processing device 200 may determine passages in the virtual store space by considering the set virtual store space, the virtual display stands, and the locations of the virtual products and generate the virtual store images by considering the passages in the store.

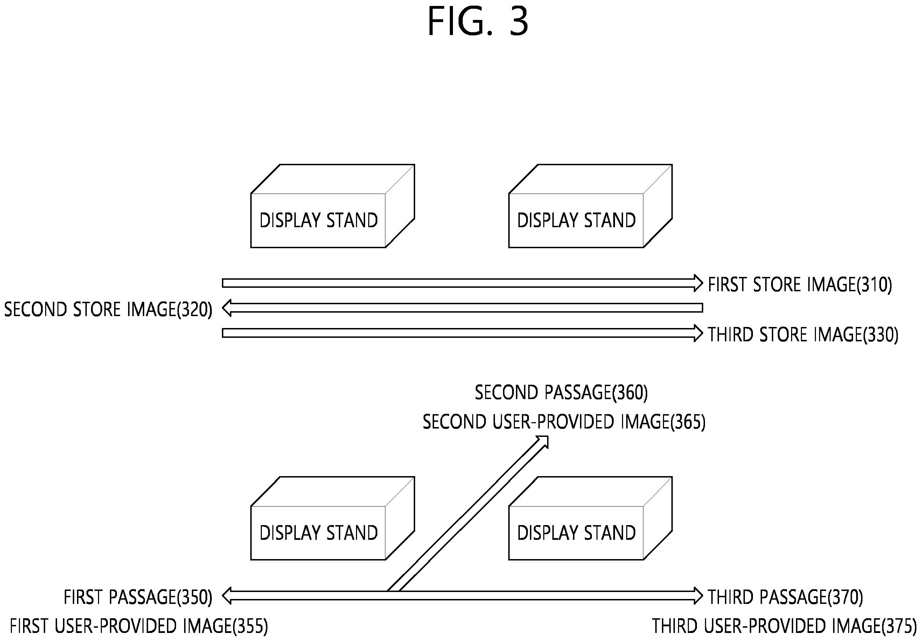

FIG. 3 is a conceptual diagram of an operation of a product transaction service server according to an embodiment of the present invention.

FIG. 3 shows an operation of a product transaction service server for generating a user-provided image on the basis of a received store image.

A product transaction service server may receive information on a store image from an image processing device. The store image may be an omnidirectional image (or a 360° image). Also, the product transaction service server may receive information on a location at which the store image has been captured and map information of the inside of the store from the image processing device.

Referring to the upper part of FIG. 3, the product transaction service server may determine an area which has been unnecessarily imaged a plurality of times on the basis of store image information, store image capturing location information, and map information of the inside of the store. The product transaction service server may select one of a plurality of store images corresponding to the area which has been imaged a plurality of times or may generate one store image by combining a plurality of store images.

For example, a passage in which fruit display stands are located among passages in the store may be moved a plurality of times so that the image processing device may image products. For example, a first store image 310 may be generated on the basis of a first movement, a second store image 320 may be generated on the basis of a second movement, and a third store image 330 may be generated on the basis of a third movement. In this case, the product transaction service server may determine only one (e.g., the first store image 310) of the plurality of store images as a user-provided image and remove other store images (e.g., the second store image 320 and the third store image 330). Alternatively, one user-provided image may be generated by combining the first store image 310, the second store image 320, and the third store image 330.

Referring to the lower part of FIG. 3, the product transaction service server may classify the store images according to the passages in the store. For example, when there are first, second, and third passages 350, 360, and 370 at a junction, the product transaction service server may generate a store image of the first passage 350 as a first user-provided image 355, generate a store image of the second passage 360 as a second user-provided image 365, and generate a store image of the third passage 370 as a third user-provided image 375. That is, it is possible to generate a passage-specific user-provided image selected on the basis of matching with a passage-specific store image.

In other words, the product transaction service server may edit an area which has been unnecessarily imaged a plurality of times on the basis of the store image information, the store image capturing location information, and the map information of the inside of the store and generate a user-provided image by classifying the store images according to the passages in the store.

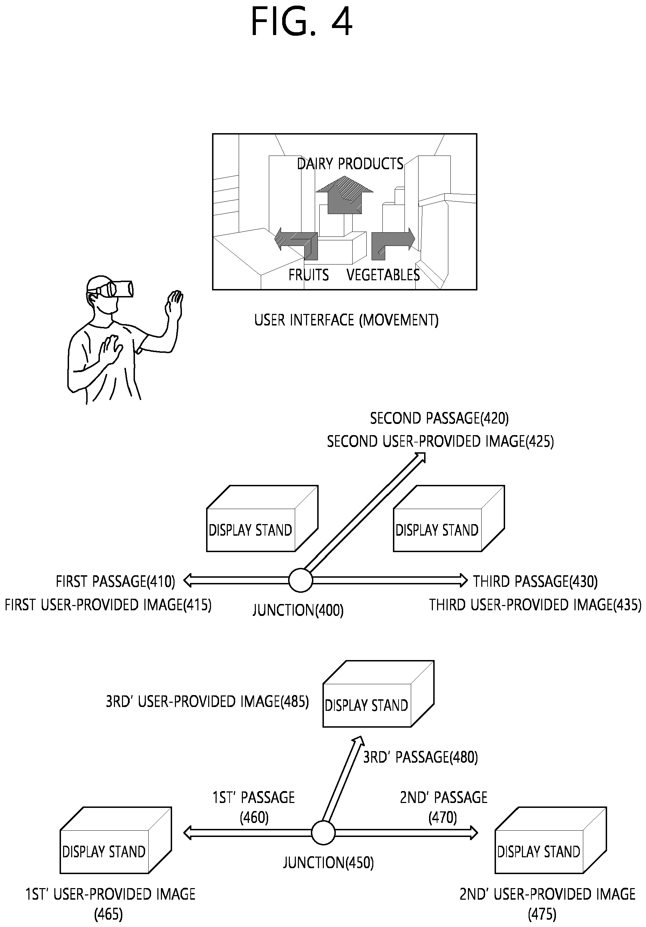

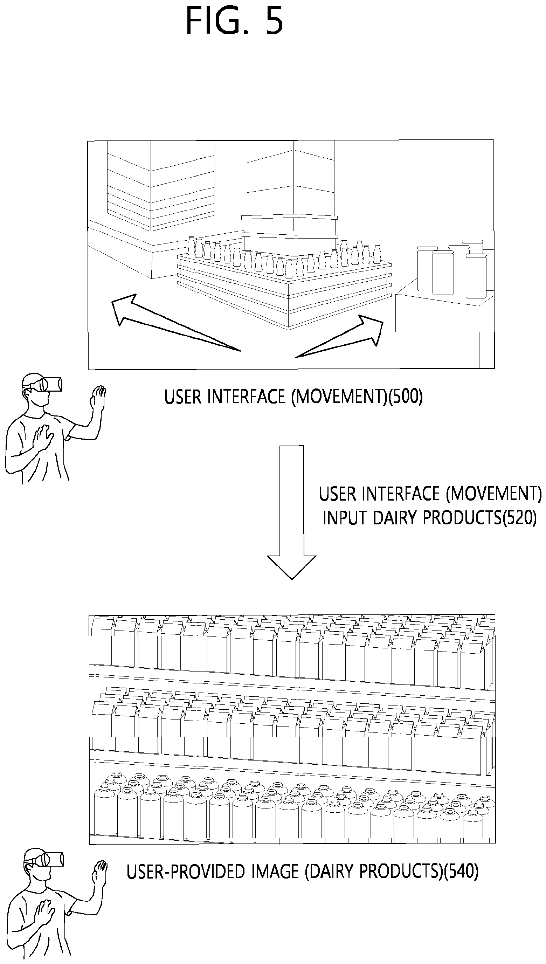

The product transaction service server may generate movement control information and transaction control information on the basis of the generated user-provided image. FIGS. 4 and 5 show an operation of a product transaction service server for generating movement control information and transaction control information on the basis of generated user-provided image.

FIG. 4 is a conceptual diagram of an operation of a product transaction service server according to an embodiment of the present invention.

FIG. 4 shows a method of generating movement control information on the basis of a user-provided image. Movement control information may be control information for providing a user-provided image corresponding to user-input information input through a user interface (movement).

A product transaction service server may generate movement control information for matching a user-provided image to each passage. A user-provided image may be provided through a user device according to input information input through the user interface (movement) on the basis of the movement control information.

Referring to the upper part of FIG. 4, when a passage in a store branches into a plurality of passages at a junction 400, movement control information may be generated to match a user-provided image to each passage on the basis of the junction 400.

A first passage 410, a second passage 420, and a third passage 430 may be assumed to exist at the junction 400. User-provided images may be matched to a first user-provided image 415 of the first passage 410, a second user-provided image 425 of the second passage 420, and a third user-provided image 435 of the third passage 430. Movement control information may include information for matching a user-provided image to each passage.

The first user-provided image 415 may be an omnidirectional image captured while an image processing device moves through the first passage 410, the second user-provided image 425 may be an omnidirectional image captured while the image processing device moves through the second passage 420, and the third user-provided image 435 may be an omnidirectional image captured while the image processing device moves through the third passage 430.

Movement control information may also be generated to provide the user interface (movement) at the junction 400.

Referring to the lower part of FIG. 4, a junction 450 at which the user interface (movement) is provided may be set even when a passage does not branch. When products are placed at different locations in the same passage, a passage may be set on the basis of the junction 450, and movement control information may be set. In other words, a junction may be a location which is set so that the user interface (movement) may be output. Junctions may be set at regular intervals (distances) or set by considering locations of products.

For example, on the basis of the junction 450, a display stand of 1st' products (e.g., fruits) may be located in a 1st' passage (a left passage) 460, a display stand of 2nd' products (e.g., vegetables) may be located in a 2nd' passage (a left passage) 470, a display stand of 3rd' products (e.g., dairy products) may be located in a 3rd' passage (a forward passage) 480.

In this case, the 1st' passage 460 may be matched to a 1st' user-provided image 465 of moving through the 1st' passage 460 to check 1st' products in detail, the 2nd' passage 470 may be matched to a 2nd' user-provided image 475 of moving close to 2nd' products through the 2nd' passage 470 to check 2nd' products in detail, the 3rd' passage 480 may be matched to a 3rd' user-provided image 485 of moving close to 3rd' products through the 3rd' passage 480 to check 3rd' products in detail, and matching information may be generated as movement control information.

The product transaction service server may set passage names for each of the passages and match a passage-specific user-provided image to be output to user-input information. For example, when there are display stands of fruits in a first passage, the passage name of the first passage may be set to fruit, and movement control information may be generated to match a first user-provided image to input information (a left direction indicator) of a user interface indicating the first passage. Likewise, when there are display stands of dairy products in a second passage, the passage name of the second passage may be set to dairy, and movement control information may be generated to match a second user-provided image to input information (a forward direction indicator) of the user interface indicating the second passage. When there are display stands of vegetables in a third passage, the passage name of the third passage may be set to vegetable, and movement control information may be generated to match a third user-provided image to input information (a right direction indicator) of the user interface indicating the third passage.

The set path name information may be output on input buttons of the user interface.

For example, a user who wants to move directly to the fruit display stands may press an input button (fruit) of the user interface displayed as "Fruit" on the screen of a product purchase device. Input information corresponding to the input button (fruit) may be input, and a user-provided image matched to the input information corresponding to the input button (fruit) may be output on the user device.

FIG. 5 is a conceptual diagram of an operation of a product transaction service server according to an embodiment of the present invention.

FIG. 5 shows a method of generating movement control information on the basis of a user-provided image. In particular, a method of generating movement control information for directly moving to a product or a product category desired by a user is illustrated.

When a user inputs specific user-input information in a user interface (movement) 500 on the basis of matching between user-input information and user-provided images, a user-provided image matched to the user-input information may be output. The user-input information may be information on a product desired by the user or category information of the product.

As movement control information, the product transaction service server may generate information about which product is on sale at which location in which passage through object analysis of a user-provided image. For example, the product transaction service server may determine that strawberries are placed at a third point in a first passage and manage this information as movement control information.

Also, as movement control information, the product transaction service server may generate information that includes which categories of products are sold at which locations and in which passage through object analysis of a user-provided image. For example, when products, such as milk, cheese, and yogurt, are placed at a specific location, the product transaction service server may determine that products corresponding to the dairy category are placed on sale at the corresponding location. The product transaction service server may determine at which points in which passages the dairy category, the fruit category, etc. are located and manage the information as movement control information.

A product or a product category (e.g., a dairy product 520) to purchase may be input through the user interface (movement) 500, and a user-provided image (dairy) 540 of a location corresponding to the input product or product category (e.g., the dairy product 520) may be directly output on the basis of the movement control information.

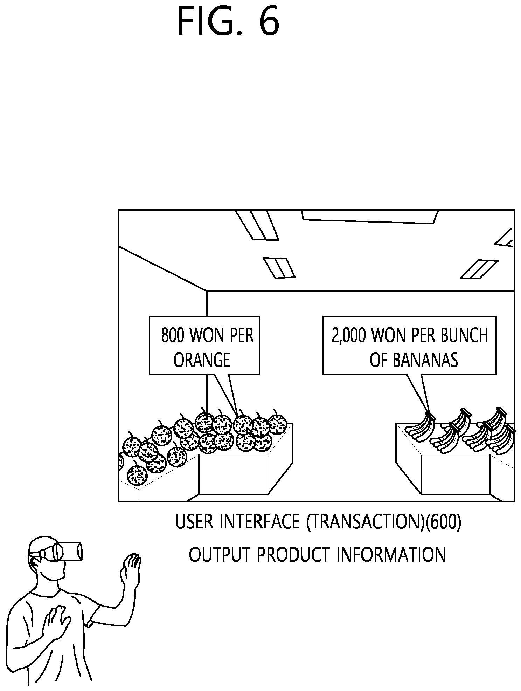

FIG. 6 is a conceptual diagram showing an operation of a product transaction service server according to an embodiment of the present invention.

FIG. 6 shows a method of generating transaction control information on the basis of a user-provided image. The transaction control information may be control information for providing a user-provided image corresponding to user-input information input through a user interface (transaction).

Referring to FIG. 6, the product transaction service server may generate transaction control server for providing product information, selecting a product, and performing a transaction for the product. According to input information input through a user interface (transaction) 600 on the basis of the transaction control information, a user-provided image may be provided through the user device. The user interface (transaction) 600 may be provided when the distance between the location of a product and a virtual location which is determined by a user's virtual movement on a virtual store space is a threshold distance or less.

An image of a product may be extracted from the user-provided image as object information. For example, it may be assumed that oranges, watermelons, strawberries, etc. which are on sale as products are included in the user-provided image.

The product transaction service server may extract object image information (e.g., image information of oranges, watermelons, and strawberries) of each object in the user-provided image. The extracted object image information may be matched to product information through image analysis.

For example, the product transaction service server may extract object image information of an orange and determine which product corresponds to the image information of an orange. In the product transaction service server, a reference image of a specific product (e.g., oranges) may have been registered already. A product (e.g., oranges) which has a reference image (e.g., a registered reference image of oranges) having the highest similarity with input object image information (e.g., an extracted orange image) may be determined as a product corresponding to the input object image. In other words, a product corresponding to the object image information through image analysis may be determined to be an "orange."

The product transaction service server may match product information (the price, origin, whether the product is discounted, etc.) of oranges and object image information of oranges to each other. The product information matched to the object image information of oranges may be presented as image information and output on a user-provided image.

Alternatively, according to an embodiment of the present invention, the product transaction service server may extract object-related information (e.g., text (or a card, a sign, a description board) for describing an object, an object-related quick response (QR) code, or the like), which is placed close to each object in a user-provided image and related to the object, as object information of the object. The object-related information extracted by the product transaction service server may be matched to product information through image analysis. For example, as object-related information, the product transaction service server may extract text, such as "XXXX won per California orange," placed close to oranges or image information of an orange-related QR code. The object-related information may be matched to an object (or an object image) which is closest to an extraction location of the object-related information.

Subsequently, the product transaction service server may determine a product corresponding to the object-related information. The product transaction service server may match product information (the price, origin, whether the product is discounted, etc.) of a specific product (e.g., an orange) corresponding to the object-related information to the object-related information (and/or object information or the object-related information) and provide the product information of the specific product to the user. For example, the product information which is matched to the object-related information (or the object image information) of the specific product (e.g., an orange) may be presented as image information and output on a user-provided image.

According to an embodiment of the present invention, extracted object image information and product information may be matched to each other by additionally considering location information. The product transaction service server may receive store image capturing location information and map information of the inside of a store from an image processing device and determine what a product in a user-provided image is. As described above, the map information of the inside of the store may include passages in the store and locations of products in the store (or product information according to locations in the store).

For example, it may be assumed that a user-provided image is captured at a first location and an object image of a first product and an object image of a second product are included in the user-provided image in first and second directions, respectively. It is possible to determine what the first product placed in a first direction from the first location is on the basis of the map information of the inside of the store and determine what the product product placed in a second direction from the first location is on the basis of the map information of the inside of the store. In other words, product information to be matched to extracted object image information may be determined by only capturing location information and capturing direction information without image analysis.

Alternatively, according to an embodiment of the present invention, when a user-provided image is captured at the first location, products (e.g., oranges, strawberries, and watermelons) placed at the first location may be determined first, and which one (e.g., strawberries) of the products (e.g., oranges, strawberries, and watermelons) corresponds to object image information may be determined.

Otherwise, according to an embodiment of the present invention, the product transaction service server may process object identification information of each individual object in a user-provided image and match the object identification information to product information. For example, while collecting a store image, the image processing device may additionally collect location information of products placed in the store (product location information) and identification information of the products (product identification information). The location information of products placed in the store and the identification information of the products may be transmitted to the image processing device by an additional communication module which is located in the store or near the products. The product location information may include information on detailed locations of the products in the store (e.g., the third column on the third layer of the first display stand in A area), and the product identification information may include information for identifying the products (e.g., an identification code of oranges: 1010101). The product location information and the product identification information may be one piece of grouped information. Alternatively, the product identification information may include the location information of the products. Hereinafter, in an embodiment of the present invention, product location information and product identification information will be described as separate pieces of information for convenience of description.

For example, the product transaction service server may identify a product in a user-provided image and match product information to the identified product by additionally considering the product location information and the product identification information transmitted by the communication module and captured store image information and store map information.

First, the product transaction service server may determine at which location (e.g., A area) the captured store image information has been captured in the store on the basis of the store map information. The product transaction service server may match an object image included in a store image captured at a capturing location (e.g., A area) in the store to product location information (e.g., the third column on the third layer of the first display stand in A area) and product identification information (e.g., an identification code of oranges: 1010101). Specifically, the product transaction service server may determine the product location (e.g., the third column on the third layer of the first display stand) of an object in the store image by performing image analysis on the store image. The product transaction service server may recognize A object placed in the third column on the third layer of the first display stand as an orange on the basis of the product location information and the product identification information matched to the product location of the object. Subsequently, the product transaction service server may provide product information of the recognized object in the store to the user.

The method shown in FIG. 6 may be used independently or in combination to provide product information in a user-provided image.

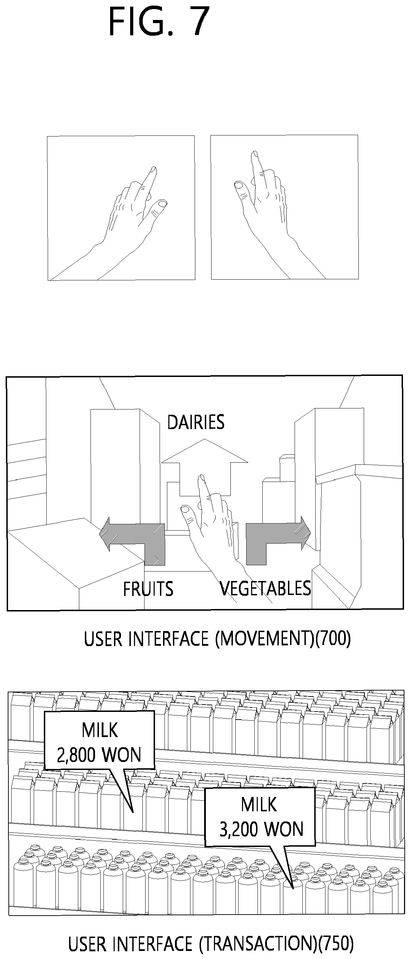

FIG. 7 is a conceptual diagram showing an operation of a product transaction service server according to an embodiment of the present invention.

FIG. 7 shows a user's product purchasing procedure based on movement control information and transaction control information.

Disclosed is a process in which a user makes a virtual movement in a store through a user interface (movement), selects a product, and performs a transaction for the product through a user interface (transaction). The user interface (movement) and the user interface (transaction) are assumed to be user interfaces which recognize a motion of a user's hand as input information. However, in addition to a motion of a user's hand, various formats of input information may be used as user-input information.

Referring to FIG. 7, a user may receive a user-provided image through a user device.

For example, the user device may be an HMD. Also, the user device may recognize a motion of the user's hand and change the hand motion into input information.

Referring to the upper part of FIG. 7, the user may virtually move in a store through a user interface (movement) 700. For example, the user may virtually shop for a desired product through the user interface (movement) 700 as if he or she entered the store through an actual entrance of the store and purchased the product. A movement indicator (e.g., an arrow) displayed on the user interface (movement) 700 may be selected by the user's hand, and a user-provided image according to the selected movement indicator may be provided through the user device.

The user may move directly to a product to purchase through the user interface (movement) 700. For example, when the user wants to purchase strawberries, the user may input "fruits" to the user interface (movement) 700 or select "fruits" through the user interface (movement) 700. In this case, a user-provided image corresponding to fruit display stands may be provided to the user device.

The user may select a product displayed in the user-provided image with his or her hand. When the user's hand selects a specific product image, a user interface (transaction) 750 may recognize a motion of the user's hand as input information and output product information matched to the product image. For example, when the position of the user's hand with which the user makes a motion of picking up an object coincides with the position of a specific product image, the user interface (transaction) 750 recognizes the motion of the user's hand as input information and output product information matched to the product image.

The user interface (transaction) 750 may receive user-input information about whether to purchase the product from the user. When the user wants to purchase the product, information about the number of products to purchase may be input through the user interface (transaction) 750, and the purchased products may be stored in a virtual shopping basket.

When the user finishes selecting products in the store, he or she may pay for products collected in the shopping basket through the user interface (transaction) 750. The user may input payment information (a card number or the like) through the user interface (transaction) 750, and a product transaction service server may perform a transaction of the products on the basis of the payment information.

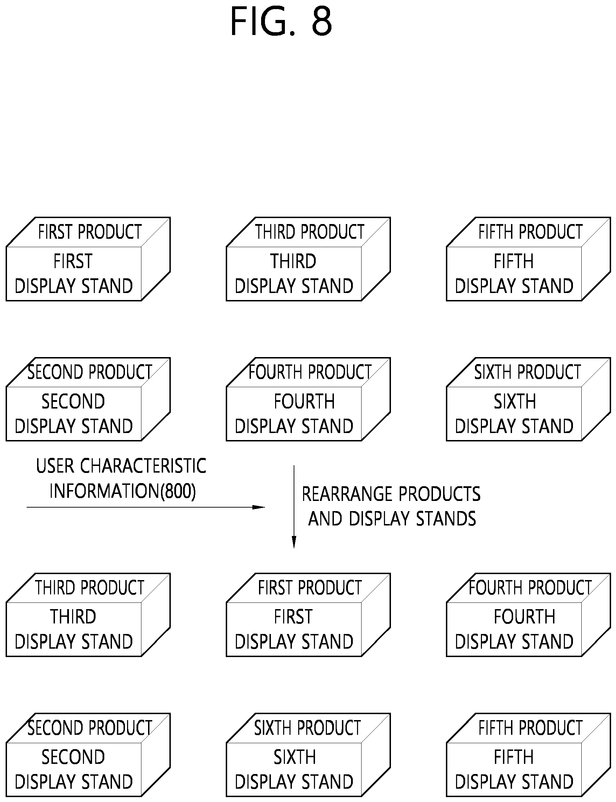

FIG. 8 is a conceptual diagram showing an operation of a product transaction service according to an embodiment of the present invention.

FIG. 8 shows a method of adaptively arranging products in a virtual store space.

Referring to FIG. 8, the locations of products may be adaptively adjusted according to user characteristic information (the user's purchasing tendency and information on the user's purchasing history) 800.

For example, the user characteristic information 800 may include the user's purchasing history information, which may include information on products that the user has purchased before.

It may be assumed that the purchasing history information includes fruits and dairy products. In this case, the location of a product and passages in a store may be adjusted so that fruit display stands and dairy display stands may be located at the entrance of the store. Then, the user can move to the fruit display stands and the dairy display stands first.

In other words, display stands of products in which the user is expected to be interested may be located first, and when the user enters the virtual space through his or her user device, products may be placed in the virtual space by considering the user's degrees of interest in the products. The user's degrees of interest in products may be determined on the basis of the user's purchasing history, sex, age, and the like. In this way, the user's products of interest may be shown to the user first in a user-provided image after the user's entry.

Alternatively, according to an embodiment of the present invention, a user interface (movement) may be additionally provided to move directly to the locations of products in which the user is expected to be interested. For example, a product image may be provided through the user interface (movement) so that the user can move directly to the location of a product that the user has purchased before. When the product image is selected on the user interface (movement) by the user, a user-provided image corresponding to the product image may be directly provided. The user may directly select the product in the provided user-provided image and perform a purchasing procedure.

Hereinafter, an image processing device used to generate a store image will be described by way of example according to an embodiment of the present invention. The image processing device described below is an example, and various other forms of image processing devices may be used to generate a store image.

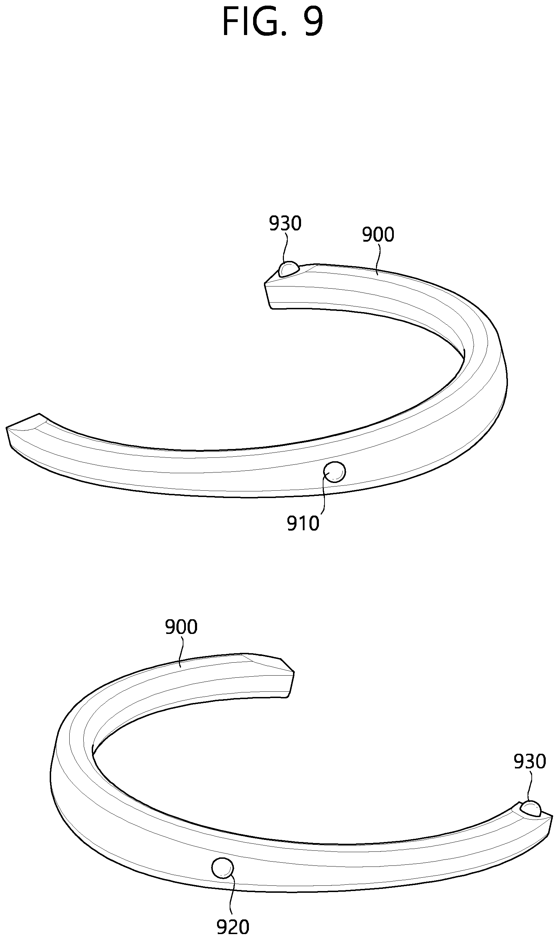

FIG. 9 is a schematic view illustrating an omnidirectional image processing apparatus according to an exemplary embodiment of the present inventive concept.

The structure of the omnidirectional image processing apparatus is as illustrated in FIG. 9.

Referring to FIG. 9, an omnidirectional image processing apparatus 900 may have a wearable structure and may have a necklace-like shape that can be worn around the neck of a user. The omnidirectional image processing apparatus 900 may be in the shape of an open necklace that is open on one side thereof, as illustrated in FIG. 9, or in the shape of a non-open necklace. In the description that follows, it is assumed that the omnidirectional image processing apparatus 900 has a U shape that is open on one side thereof. The omnidirectional image processing apparatus 900, which is U-shaped, may be worn around the neck of the user as a wearable device and may be able to capture an omnidirectional image.

For convenience, it is assumed that the omnidirectional image processing apparatus 900 is worn around the neck of the user in the shape of a necklace (or in the shape of an open necklace that is open on one side thereof or in a U shape). However, the omnidirectional image processing apparatus 900 may not necessarily be worn around the neck of the user. For example, the omnidirectional image processing apparatus 900 may acquire an omnidirectional image by being hung on/attached to other parts of the body of the user or an external object.

The user can wear the omnidirectional image processing apparatus 900 around his or her neck and can thus acquire a plurality of images for generating an omnidirectional image with both hands free.

The omnidirectional image processing apparatus 900 may include a plurality of image capturing units. The plurality of image capturing units may be provided in the omnidirectional image processing apparatus 900 to be a particular distance (or a predetermined distance) apart from one another and may independently capture images in accordance with a predetermined field of view/image capturing line. The locations of the plurality of image capturing units may be fixed in the omnidirectional image processing apparatus 900, or the plurality of image capturing units may be movable so that their locations may vary.

For example, the omnidirectional image processing apparatus 900 may include three image capturing units, and the three image capturing units may capture an omnidirectional image with a predetermined field of view (e.g., 120 degrees to 180 degrees). The three image capturing units may be first, second, and third image capturing units 910, 920, and 930.

For convenience, an omnidirectional image processing apparatus 900 including three image capturing units will be described below. However, the omnidirectional image processing apparatus 900 may be modified to include a plurality of image capturing units other than three (e.g., two, four, five, or six image capturing units) to capture an omnidirectional image, without departing from the spirit and scope of the present inventive concept.

The first, second, and third image capturing units 910, 920, and 930 may capture an image in accordance with a predetermined field of view. At given time resources, a first image may be generated by the first image capturing unit 910, a second image may be generated by the second image capturing unit 920, and a third image may be generated by the third image capturing unit 930. The first, second, and third image capturing units 910, 920, and 930 may have a field of view of 120 degrees or greater, and there may exist overlapping areas between the first, second, and third images. Thereafter, an omnidirectional image may be generated by stitching together and/or correcting the first, second, and third images, which are captured at the given time resources by the omnidirectional image processing apparatus 900. The stitching and/or the correcting of a plurality of images may be performed by the omnidirectional image processing apparatus or may be performed by a user device (such as a smartphone) that can communicate with the omnidirectional image processing apparatus 900. That is, additional image processing for a plurality of images generated may be performed by the omnidirectional image processing apparatus 900 and/or another image processing apparatus (such as a smartphone, a personal computer (PC), or the like).

The characteristics of the omnidirectional image processing apparatus and an omnidirectional image generation method will hereinafter be described.

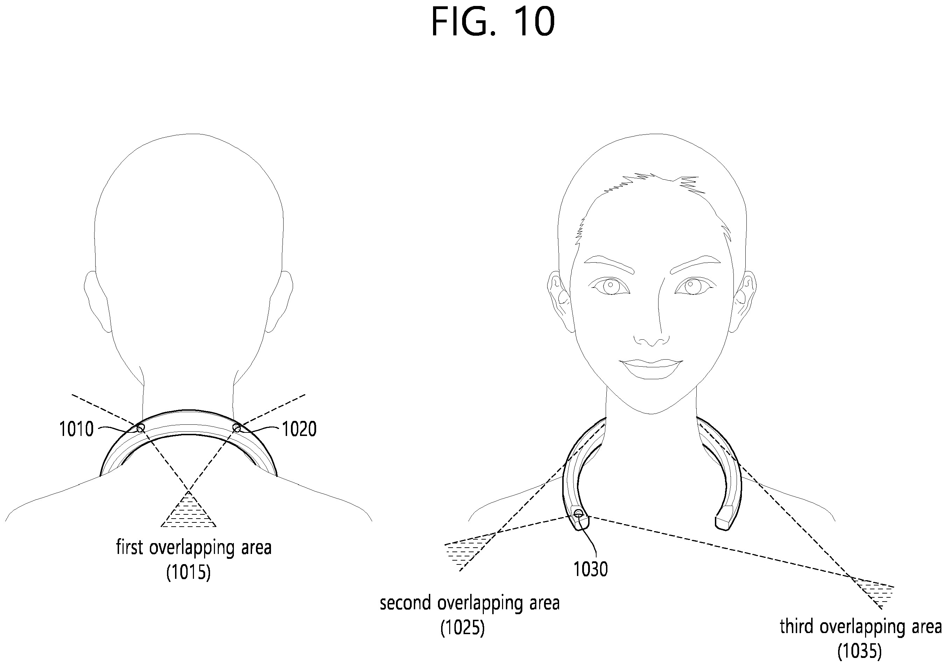

FIG. 10 is a schematic view showing the characteristics of a plurality of image capturing units provided in the omnidirectional image processing apparatus according to an exemplary embodiment of the present inventive concept.

FIG. 10 shows the characteristics of a plurality of image capturing units provided in a U-shaped omnidirectional image processing apparatus. The locations of the plurality of image capturing units illustrated in FIG. 10 are merely exemplary. The plurality of image capturing units may be disposed at various locations in the omnidirectional image processing apparatus to capture a plurality of images for generating an omnidirectional image.

The rear of the omnidirectional image processing apparatus is as illustrated in the upper part of FIG. 10.

First and second image capturing units 1010 and 1020, which are included in the omnidirectional image processing apparatus, may be located at a curved part of the omnidirectional image processing apparatus where curvature is present. Specifically, when a user wears the omnidirectional image processing apparatus around his or her neck as a wearable device, the first and second image capturing units 1010 and 1020 may be provided at the curved part of the omnidirectional image processing apparatus that is in contact with the back of the neck of the user. For example, the first and second image capturing units 1010 and 1020 may be a predetermined distance apart from a point on the U-shaped omnidirectional image processing apparatus with a maximum curvature (e.g., the middle part of the U-shaped omnidirectional image processing apparatus).

The first image capturing unit 1010 may capture an image of a region including a rear left blind spot with respect to the user's line of sight. The second image capturing unit 1020 may capture an image of a region including a rear right blind spot with respect to the user's line of sight. Specifically, the first image capturing unit 1010 may have a first field of view and may capture an image of a region corresponding to the first field of view. The second image capturing unit 1020 may have a second field of view and may capture an image of a region corresponding to the second field of view. For example, the first and second fields of view may be 120 degrees to 180 degrees.

When image capturing is performed by the first and second image capturing units 1010 and 1020, a first overlapping area 1015, which is the overlapping area of the first and second fields of view, may be generated. Thereafter, an omnidirectional image may be generated through image stitching in consideration of the overlapping area.

The front of the omnidirectional image processing apparatus is as illustrated in the lower part of FIG. 10.

A third image capturing unit 1030 may be disposed at the front of the omnidirectional image processing apparatus. Specifically, the third image capturing unit 1030 may be disposed at an end portion of the omnidirectional image processing apparatus (i.e., at an end portion of the U-shaped omnidirectional image processing apparatus). When a user wears the omnidirectional image processing apparatus around his or her neck as a wearable device, the end portion of the U-shaped omnidirectional image processing apparatus may face forward (i.e., toward the direction of the user's line of sight). The omnidirectional image processing apparatus includes first and second end portions, and the third image capturing unit 1030 may be disposed at one of the first and second end portions.

The third image capturing unit 1030 may perform image capturing in the same direction as the user's line of sight to capture an image of a region corresponding to the user's line of sight.

Specifically, the third image capturing unit 1030 may have a third field of view and may capture an image of a region corresponding to the third field of view. For example, the third field of view may be 120 degrees to 180 degrees. When image capturing is performed by the third image capturing unit 1030, a second overlapping area 1025, which is the overlapping area of the first field of view of the first image capturing unit 1010 and the third field of view of the third image capturing unit 1030, may be generated. Also, when image capturing is performed by the third image capturing unit 1030, a third overlapping area 1035, which is the overlapping area of the second field of view of the second image capturing unit 1020 and the third field of view of the third image capturing unit 1030, may be generated.

Due to the structural characteristics of the omnidirectional image processing apparatus as a wearable device that can be worn around the neck of a user, the first and second image capturing units 1010 and 1020 may be positioned higher than the third image capturing unit 1030 on the basis of the ground. Also, the third image capturing unit 1030 may be disposed at only one end portion of the omnidirectional image processing apparatus.

In an existing omnidirectional image processing apparatus, a plurality of image capturing units may be configured to be disposed at the same height and a predetermined angle, but in the omnidirectional image processing apparatus according to an exemplary embodiment of the present inventive concept, a plurality of image capturing units may be configured to have different angles with respect to each other and to be disposed at different heights. Thus, the first, second, and third overlapping areas 1015, 1025, and 1035, which are generated by a plurality of images captured by the plurality of image capturing units of the omnidirectional image processing apparatus according to an exemplary embodiment of the present inventive concept, may have different sizes and/or different shapes.

Thereafter, an omnidirectional image may be generated by performing image processing (such as image stitching/correction) on the first, second, and third images each generated by the first, second, and third image capturing units 1010, 1020, and 1030 in consideration of the first, second, and third overlapping areas 1015, 1025, and 1035.

The first, second, and third fields of view may be set to be the same, or to differ from one another, without departing from the spirit and scope of the present inventive concept.

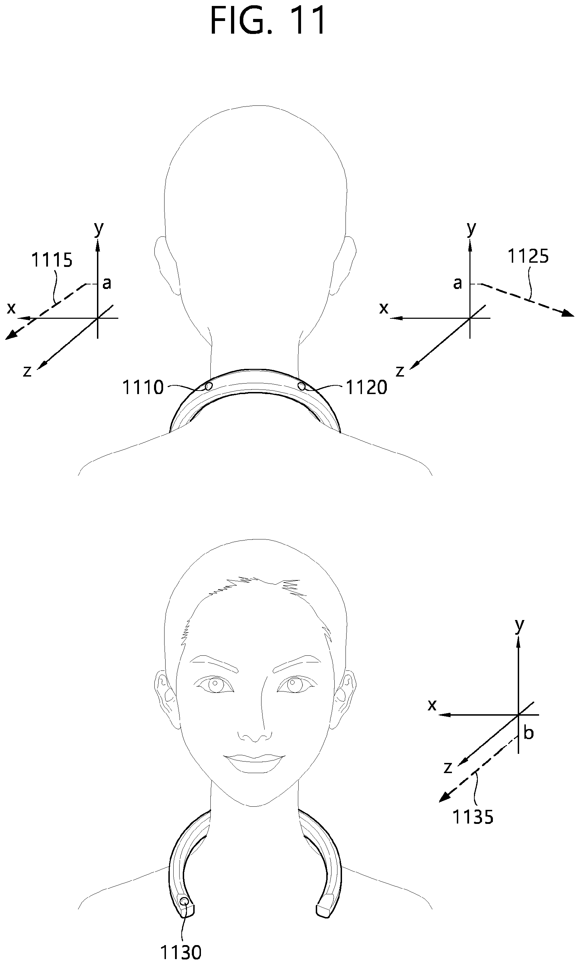

FIG. 11 is a schematic view illustrating image capturing lines of a plurality of image capturing units according to an exemplary embodiment of the present inventive concept.

FIG. 11 illustrates image capturing lines of a plurality of image capturing units installed in an omnidirectional image processing apparatus according to an exemplary embodiment of the present inventive concept. Assuming that the ground is parallel to the X-Z plane formed by the X axis and the Z axis, the plurality of image capturing lines may be defined as lines vertically penetrating the centers of the lenses of the plurality of image capturing units included in the omnidirectional image processing apparatus according to an exemplary embodiment of the present inventive concept in a space defined by the X axis, the Y axis, and the Z axis.

In an existing omnidirectional image processing apparatus, a plurality of image capturing units may be implemented at the same height at a predetermined angle (for example, 120 degrees). In this case, a plurality of image capturing lines of the plurality of image capturing units included in the existing omnidirectional image processing apparatus may be a plurality of lines extending in parallel to the ground (or the X-Z plane) and having a predetermined angle (for example, 120 degrees) with respect to one another.

As already described above, in the omnidirectional image processing apparatus according to an exemplary embodiment of the present inventive concept, the plurality of image capturing units may have different heights (or locations) and different angles with respect to one another (or the image capturing lines of the plurality of image capturing units have different angles with respect to one another) during image capturing. Thus, the properties of the image capturing lines of the omnidirectional image processing apparatus according to an exemplary embodiment of the present inventive concept differ from the properties of the image capturing lines of the existing omnidirectional image processing apparatus.

The image capturing lines of the plurality of image capturing units, illustrated in FIG. 11, are exemplary for showing differences in properties (for example, in height and angle) between the image capturing lines of the plurality of image capturing units, resulting from the characteristics of a wearable device. Also, the image capturing lines of FIG. 11 may be image capturing lines when a user who wears the omnidirectional image processing apparatus according to an exemplary embodiment of the present inventive concept does not move or the omnidirectional image processing apparatus according to an exemplary embodiment of the present inventive concept is fixed in a particular state.

The upper part of FIG. 11 illustrates image capturing lines of first and second image capturing units 1110 and 1120.

The first and second image capturing units 1110 and 1120 may be positioned relatively higher than a third image capturing unit 1130. Assuming that a user who wears the omnidirectional image capturing apparatus around is standing in a Y-axis direction, due to the structural characteristics of a wearable device that can be worn on the neck, a part of the omnidirectional image capturing apparatus with curvature (i.e., a curved/central part of a U shape) where the first and second image capturing units 1110 and 1120 are disposed may be relatively raised, and a leg part of the omnidirectional image capturing apparatus (i.e., an end part of the U shape) where the third image capturing unit 1130 is disposed may be relatively dropped.

For example, a first image capturing line 1115 of the first image capturing line 1110 may be parallel to the X-Z plane and may have a first angle, a second angle, and a third angle with respect to the X axis, the Y axis, and the Z axis, respectively, at a point "a" on the Y axis.

A second image capturing line 1125 of the second image capturing unit 1120 may be parallel to the X-Z plane and may have a fourth angle, a fifth angle, and a sixth angle with respect to the X axis, the Y axis, and the Z axis, respectively, at the point "a" on the Y axis.

Referring to the lower part of FIG. 11, a third image capturing line 1135 of the third image capturing unit 1130 may be parallel to the X-Z plane and may have a seventh angle, an eighth angle, and a ninth angle with respect to the X axis, the Y axis, and the Z axis, respectively, at a point "b" on the Y axis. Here, b may be a smaller value than a. The third image capturing line 1135 of the third image capturing unit 1130 may be parallel to the X-Z plane and may face forward like the user's line of sight (for example, toward a direction perpendicular to the X-Y plane).

That is, the first and second image capturing lines 1115 and 1125 may have the same height with respect to the Y axis, and the third image capturing line 1135 may be positioned relatively lower than the first and second image capturing lines with respect to the Y axis. The first, second, and third image capturing lines 1115, 1125, and 1135 illustrated in FIG. 11 are exemplary image capturing lines having different properties, and various image capturing lines other than those set forth herein can be defined to capture an omnidirectional image.

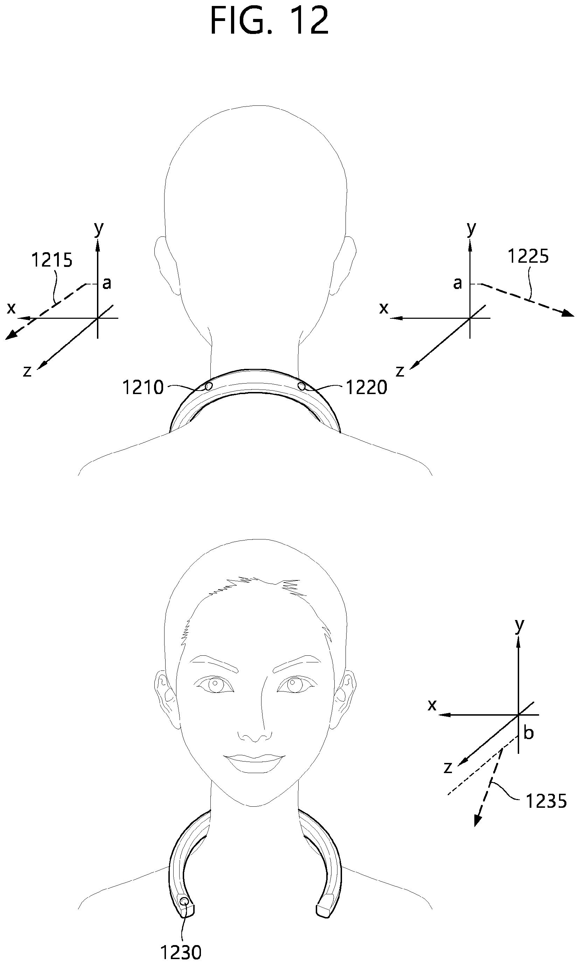

FIG. 12 is a schematic view illustrating image capturing lines of a plurality of image capturing units according to an exemplary embodiment of the present inventive concept.

FIG. 12 illustrates image capturing lines of a plurality of image capturing units, which are different from those of FIG. 11. It is assumed that the ground is parallel to the X-Z plane formed by the X axis and the Z axis.

The upper part of FIG. 12 illustrates image capturing lines of first and second image capturing units 1210 and 1220.

The first and second image capturing units 1210 and 1220 may be positioned relatively higher than a third image capturing unit 1230. Assuming that a user is standing in a Y- axis direction, due to the structural characteristics of a wearable device that can be worn around the neck, image capturing may be performed in a state in which a part of the omnidirectional image capturing apparatus with curvature (i.e., a curved part of a U shape) where the first and second image capturing units 1210 and 1220 are disposed is relatively raised and a leg part of the omnidirectional image capturing apparatus (i.e., an end part of the U shape) where the third image capturing unit 1230 is disposed is relatively dropped.

For example, a first image capturing line 1215 of the first image capturing line 1210 may be parallel to the X-Z plane and may have a first angle, a second angle, and a third angle with respect to the X axis, the Y axis, and the Z axis, respectively, at a point "a" on the Y axis.

A second image capturing line 1215 of the second image capturing unit 1220 may be parallel to the X-Z plane and may have a fourth angle, a fifth angle, and a sixth angle with respect to the X axis, the Y axis, and the Z axis at the point "a" on the Y axis.

The lower part of FIG. 12 illustrates an image capturing line of the third image capturing unit 1230.

A third image capturing line 1235 of the third image capturing unit 1230 may be parallel to the X-Z plane and may have a seventh angle, an eighth angle, and a ninth angle with respect to the X axis, the Y axis, and the Z axis, respectively, at a point "b" on the Y axis.

Since the third image capturing unit 1230 is disposed at an end portion of the omnidirectional image processing apparatus, the third image capturing line may not be parallel to the X-Z plane and may have a predetermined angle (for example, 0 to 30 degrees) with respect to the X-Z plane.

That is, the first and second image capturing lines 1215 and 1225 may have the same height with respect to the Y axis, and the third image capturing line 1235 may be positioned relatively lower than the first and second image capturing lines 1215 and 1225 with respect to the Y axis. Also, the first and second image capturing lines 1215 and 1225 may be parallel to the X-Z plane, but the third image capturing line 1235 may not be parallel to the X-Z plane.

In another exemplary embodiment of the present inventive concept, the first image capturing line of the first image capturing unit may form a first' angle with respect to the X-Z plane and may have a first angle, a second angle, and a third angle with respect to the X axis, the Y axis, and the Z axis, respectively, starting from the point "a" on the Y axis. Also, the second image capturing line of the second image capturing unit may form the first' angle with respect to the X-Z plane and may have a fourth angle, a fifth angle, and a sixth angle with respect to the X axis, the Y axis, and the Z axis, respectively, starting from the point "a" on the Y axis. The third image capturing line of the third image capturing unit may form a second' angle with respect to the X-Z plane and may have a seventh angle, an eighth angle, and a ninth angle with respect to the X axis, the Y axis, and the Z axis, respectively, starting from a point "b" on the Y axis.

In yet another exemplary embodiment of the present inventive concept, the first image capturing line of the first image capturing unit may form angle 1' with respect to the X-Z plane and may have a first angle, a second angle, and a third angle with respect to the X axis, the Y axis, and the Z axis, respectively, starting from the point "a" on the Y axis. Also, the second image capturing line of the second image capturing unit may form a second' angle with respect to the X-Z plane and may have a fourth angle, a fifth angle, and a sixth angle with respect to the X axis, the Y axis, and the Z axis, respectively, starting from the point "a" on the Y axis. The third image capturing line of the third image capturing unit may form a third' angle with respect to the X-Z plane and may have a seventh angle, an eighth angle, and a ninth angle with respect to the X axis, the Y axis, and the Z axis, respectively, starting from the point "b" on the Y axis.

That is, in the omnidirectional image processing apparatus according to an exemplary embodiment of the present inventive concept, the image capturing lines of a plurality of image capturing units may be positioned at different points on the Y axis and may have different angles with respect to the ground (or the X-Z plane) unlike in an image processing apparatus where the image capturing lines of a plurality of image capturing units have the same angle with respect to the ground at a given point on the Y axis.

The above-described embodiments of the present invention may be implemented in the form of program instructions executable by various computer elements and recorded in a computer-readable recording medium. The computer-readable recording medium may include program instructions, data files, data structures, etc. alone or in combination. The program instructions recorded on the computer-readable recording medium may be specially designed and configured for the present invention or known to and used by those of ordinary skill in the computer software field. Examples of the computer-readable recording medium include magnetic media, such as a hard disk, a floppy disk, and magnetic tape, optical media, such as a compact disc read-only memory (CD-ROM) and a digital versatile disc (DVD), magneto-optical media, such as a floptical disk, and hardware devices, such as a ROM, a random access memory (RAM), and a flash memory, specially configured to store and perform program instructions. Examples of the program instructions include not only machine language code produced by a compiler but also high-level language code that can be executed by a computer through an interpreter or the like. To perform the operations of the present invention, the hardware devices may be configured as one or more software modules, and vice versa.

While the present invention has been described above with reference to specific details, such as detailed elements, by way of limited embodiments and drawings, these are provided merely to aid the overall understanding of the present invention. The present invention is not limited to the embodiments, and various modifications and changes can be made thereto by those of ordinary skill in the technical field to which the present invention pertains.

Therefore, the spirit of the present invention should not be limited to the above-described embodiments, and the scope of the present invention should be regarded as encompassing not only the following claims but also their equivalents and variations.

## Claims

1. An image-based transaction method comprising:
receiving, by a product transaction service server, store image information from an image processing device;
generating, by the product transaction service server, a user-provided information on the basis of the store image information; and
transmitting, by the product transaction service server, the user-provided information to a user device,
wherein the user-provided information includes user-provided image information and control information.

2. The image-based transaction method of claim 1, wherein the user-provided image information is generated through post-processing of the store image information,
the control information includes movement control information and transaction control information,
the movement control information includes control information for a user's virtual movement in a virtual store space which is output on the basis of the user-provided image information, and
the transaction control information includes control information for a transaction of a product placed in the virtual store space.

3. The image-based transaction method of claim 2, wherein the movement control information outputs a user interface (movement) on the user device and outputs user-provided image information corresponding to user-input information input to the user interface (movement), and
the transaction control information outputs a user interface (transaction) on the user device and provides product information corresponding to user-input information input to the user interface (transaction).

4. The image-based transaction method of claim 3, wherein the user interface (movement) is output at a set junction, and
the user interface (transaction) is provided when a distance between a location of the product and a virtual location determined by the virtual movement is a threshold distance or less.

5. The image-based transaction method of claim 4, wherein the store image information is an omnidirectional image of a store captured by the image processing device, and
the user device is able to output the omnidirectional image and recognizes a motion of the user's hand as the user-input information.

6. A product transaction service server for an image-based transaction, the product transaction service server comprising:
a communication unit configured to perform data communication with an image processing device and a user device; and
a processor configured to be operatively connected to the communication unit,
wherein the processor receives store image information from the image processing device, generates user-provided information on the basis of the store image information, and transmits the user-provided information to the user device, and
the user-provided information includes user-provided image information and control information.

7. The product transaction service server of claim 6, wherein the user-provided image information is generated through post-processing of the store image information,
the control information includes movement control information and transaction control information,
the movement control information includes control information for a user's virtual movement in a virtual store space which is output on the basis of the user-provided image information, and
the transaction control information includes control information for a transaction of a product placed in the virtual store space.

8. The product transaction service server of claim 7, wherein the movement control information outputs a user interface (movement) on the user device and outputs user-provided image information corresponding to user-input information input to the user interface (movement), and
the transaction control information outputs a user interface (transaction) on the user device and provides product information corresponding to user-input information input to the user interface (transaction).

9. The product transaction service server of claim 8, wherein the user interface (movement) is output at a set junction, and
the user interface (transaction) is provided when a distance between a location of the product and a virtual location determined by the virtual movement is a threshold distance or less.

10. The product transaction service server of claim 9, wherein the store image information is an omnidirectional image of a store captured by the image processing device, and
the user device is able to output the omnidirectional image and recognizes a motion of the user's hand as the user-input information.

11. A computer-readable recording medium in which a computer program is recorded that performs the method of any one of claims 1 to 5.
